(19) Europäisches Patentamt

European Patent Office

Office européen des brevets

(11) **EP 2 930 838 A2**

(12) **EUROPEAN PATENT APPLICATION**

(43) Date of publication:
**14.10.2015 Bulletin 2015/42**

(51) Int Cl.:
*H02M 5/27* (2006.01)     *H02M 5/293* (2006.01)
*H02M 5/297* (2006.01)

(21) Application number: **15162575.3**

(22) Date of filing: **07.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.04.2014 JP 2014080348**

(71) Applicant: **Kabushiki Kaisha Yaskawa Denki Kitakyushu-shi, Fukuoka 806-0004 (JP)**

(72) Inventors:
- **Inomata, Kentaro**
  **Kitakyushu-shi, Fukuoka 806-0004 (JP)**
- **Watanabe, Eiji**
  **Kitakyushu-shi, Fukuoka 806-0004 (JP)**
- **Tanaka, Takashi**
  **Kitakyushu-shi, Fukuoka 806-0004 (JP)**

(74) Representative: **Viering, Jentschura & Partner Patent- und Rechtsanwälte
Grillparzerstrasse 14
81675 München (DE)**

(54) **POWER CONVERTING APPARATUS, CONTROL DEVICE OF POWER CONVERTING APPARATUS, AND CONTROL METHOD OF POWER CONVERTING APPARATUS**

(57)     A power converting apparatus includes: a power converter provided between each phase of an AC power source and each phase of a load; a controller for controlling the power converter to perform a power conversion control between the AC power source and the load; and a filter provided between the AC power source and the power converter. The controller has: an oscillation component detector to detect an oscillation component of an input voltage of the power converter or an oscillation component included in a current flowing through the filter; and an output voltage controller to control an output voltage of the power converter to suppress a resonance of the filter based on the oscillation component.

*FIG. 1*

EP 2 930 838 A2

**Description**

BACKGROUND OF THE INVENTION

Field of the Invention

The present disclosure relates to a power converting apparatus, a control device of the power converting apparatus, and a control method of the power converting apparatus.

Description of the Related Art

Conventionally, there has been known, as a power converting apparatus, a matrix converter which directly converts a power of an AC power source into an AC power having a certain frequency and voltage, or a regenerative converter which performs power regeneration to the AC power source.

The power converting apparatus has a switching element such as a semiconductor switch, and performs the power conversion by switching the switching element. Accordingly, there may occur harmonic noise caused by the switching. Therefore, in the power converting apparatus, a filter may be provided on the input side.

In the case where the filter is provided on the input side, distortion may occur in the input current or input voltage due to the resonance caused by a reactor and a capacitor constituting the filter. For example, in the matrix converter having no energy buffer, distortion also appears on the output side due to the distortion on the input side. As a method of suppressing the distortion, e.g., there is a technique of extracting an oscillation component included in the output current and adjusting an output current command on the basis of the oscillation component (see, e.g., International Application Publication No. WO2013/080744).

The technique of adjusting the output current command on the basis of the oscillation component included in the output current may deteriorate the responsiveness of the power conversion control due to interference between the resonance suppression control and the current control.

SUMMARY OF THE INVENTION

In view of the above, the present invention provides a power converting apparatus capable of performing resonance suppression by a novel resonance suppression technique, a control device of the power converting apparatus, and a control method of the power converting apparatus.

In accordance with an embodiment, there is provided a power converting apparatus including: a power converter provided between each phase of an AC power source and each phase of a load; a controller configured to control the power converter to perform a power conversion control between the AC power source and the load; and a filter provided between the AC power source and the power converter. The controller contains: an oscillation component detector configured to detect an oscillation component included in an input voltage of the power converter or an oscillation component included in a current flowing through the filter; and an output voltage controller configured to control an output voltage of the power converter to suppress a resonance of the filter based on the oscillation component detected by the oscillation component detector.

In accordance with the aspect of present invention, it is possible to provide a power converting apparatus, a control device and a control method of the power converting apparatus capable of suppressing the resonance.

BRIEF DESCRIPTION OF THE DRAWINGS

FIG. 1 is a diagram illustrating a configuration example of a power converting apparatus in accordance with a first embodiment.
FIG. 2 is a diagram showing a configuration example of a bidirectional switch shown in FIG. 1.
FIG. 3 is a circuit diagram of a filter.
FIG. 4A is a block diagram in which a power phase voltage is an input and an input phase voltage is an output.
FIG. 4B is a block diagram obtained by adding a configuration of feeding back the input phase voltage to an input phase current.
FIG. 4C is a block diagram replacing the block diagram of FIG. 4B.
FIG. 5 is a diagram showing a variation of an input active current according to the control of an output phase voltage.
FIG. 6 is a diagram showing a configuration example of an input voltage estimation unit, an oscillation component detector and an output voltage controller shown in FIG. 1.

FIG. 7 is a diagram showing simulation results of a three-phase AC output voltage of the power converting apparatus in Fig. 1 before and after a resonance suppression control is performed in the power converting apparatus.

FIG. 8 is a diagram showing another configuration example of an output voltage controller.

FIG. 9 is a flowchart showing a control example by a control unit shown in FIG. 1.

FIG. 10 is a diagram illustrating a configuration example of a power converting apparatus in accordance with a second embodiment.

FIG. 11 is a diagram showing a configuration example of an input voltage estimation unit, an oscillation component detector and an output voltage controller shown in FIG. 10.

FIG. 12 is a flowchart showing a control example by a control unit shown in FIG. 10.

FIG. 13 is a diagram illustrating a configuration example of a power converting apparatus in accordance with a third embodiment.

FIG. 14 is a diagram showing a configuration example of an oscillation component detector and an input current controller shown in FIG. 13.

FIG. 15 is a diagram showing simulation results of a three-phase AC output voltage of the power converting apparatus in Fig. 13 before and after a resonance suppression control is performed in the power converting apparatus.

FIG. 16 is a flowchart showing a control example by a control unit shown in FIG. 13.

FIG. 17 is a diagram illustrating a configuration example of a power converting apparatus in accordance with a fourth embodiment.

FIG. 18 is a diagram illustrating a configuration example of a power converting apparatus in accordance with a fifth embodiment.

DESCRIPTION OF THE EMBODIMENTS

Hereinafter, a power converting apparatus, a control device of the power converting apparatus, and a control method of the power converting apparatus in accordance with embodiments of the present disclosure will be described in detail with reference to the accompanying drawings. Further, a description will be made using a matrix converter as an example of the power converting apparatus, the power converting apparatus is not limited to the matrix converter and may be, e.g., a regenerative converter or an inverter. Furthermore, the present invention is not to be limited by the embodiments.

(1. First Embodiment)

(1.1. Configuration example of the power converting apparatus)

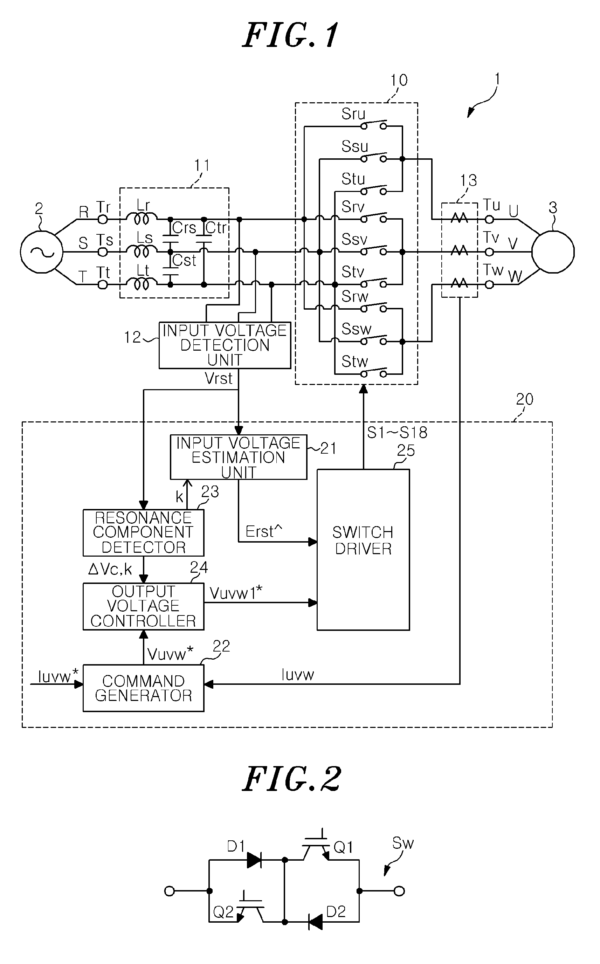

FIG. 1 is a diagram illustrating a configuration example of a power converting apparatus in accordance with a first embodiment. As shown in FIG. 1, the power converting apparatus 1 in accordance with the first embodiment is a matrix converter which is provided between a three-phase AC power source 2 (hereinafter, simply referred to as "AC power source 2") and a three-phase AC load 3 (hereinafter, simply referred to as "load 3").

The AC power source 2 is, e.g., a power system. The load 3 is, e.g., an AC motor or AC generator. In the following description, the R phase, the S phase and the T phase of the AC power source 2 are referred to as "input phases," and the U phase, the V phase and the W phase of the load 3 are referred to as "output phases."

The power converting apparatus 1 includes input terminals Tr, Ts, and Tt, output terminals Tu, Tv, and Tw, a power conversion unit (e.g., power converter) 10, a filter 11, an input voltage detection unit 12, an output current detection unit 13, and a control unit (e.g., controller or control device) 20.

The power conversion unit 10 includes a plurality of bidirectional switches Sru, Ssu, Stu, Srv, Ssv, Stv, Srw, Ssw and Stw (hereinafter sometimes collectively referred to as "bidirectional switch Sw") connecting each phase of the AC power source 2 and each phase of the load 3.

The bidirectional switches Sru, Ssu, and Stu connect the R phase, the S phase and the T phase of the AC power source 2 with the U phase of the load 3, respectively. The bidirectional switches Srv, Ssv and Stv connect the R phase, the S phase and the T phase of the AC power source 2 with the V phase of the load 3, respectively. The bidirectional switches Srw, Ssw and Stw connect the R phase, the S phase and the T phase of the AC power source 2 with the W phase of the load 3, respectively.

FIG. 2 is a diagram showing a configuration example of the bidirectional switch Sw. As shown in FIG. 2, the bidirectional switch Sw has a series circuit of a switching element Q1 and a diode D1 and a series circuit of a switching element Q2 and a diode D2, and these series circuits are connected in an inverse-parallel manner.

The bidirectional switch Sw is not limited to the configuration shown in FIG. 2 and may have a configuration including a plurality of switching elements so that a conduction direction can be controlled. For example, in the example shown in FIG. 2, the cathodes of the diodes D1 and D2 are connected to each other, but the bidirectional switch Sw may be configured such that the cathodes of the diodes D1 and D2 are not connected to each other.

Each of the switching elements Q1 and Q2 is a semiconductor switching element such as a MOSFET (Metal-Oxide-Semiconductor Field-Effect Transistor) or an IGBT (Insulated Gate Bipolar Transistor). Further, each of the switching elements Q1 and Q2 may be, e.g., a wide band gap semiconductor containing gallium nitride (GaN) or silicon carbide (SiC). If each of the switching elements Q1 and Q2 is, e.g., a reverse blocking type IGBT, the diodes D1 and D2 may not be provided.

Gate signals S1 to S9 are inputted to the gates of the switching elements Q1 of the bidirectional switches Sru, Ssu, Stu, Srv, Ssv, Stv, Srw, Ssw and Stw. Gate signals S10 to S18 are inputted to the gates of the switching elements Q2 of the bidirectional switches Sru, Ssu, Stu, Srv, Ssv, Stv, Srw, Ssw and Stw.

Returning to FIG. 1, the description of the power converting apparatus 1 will be continued. The filter 11 is provided between the R phase, the S phase and the T phase of the AC power source 2 and the power conversion unit 10 to remove switching noise caused by the switching of the bidirectional switch Sw constituting the power conversion unit 10.

The filter 11 is an LC filter including three reactors Lr, Ls and Lt and three capacitors Crs, Cst and Ctr. The reactors Lr, Ls and Lt are connected between the R phase, the S phase and the T phase of the AC power source 2 and the power conversion unit 10, respectively.

Each of the capacitors Crs, Cst and Ctr is connected between two different input phases. Specifically, the capacitor Crs is connected between the R phase and the S phase, the capacitor Cst is connected between the S phase and the T phase, and the capacitor Ctr is connected between the T phase and the R phase. Further, the filter 11 is not limited to the configuration shown in FIG. 1, and may have other configurations.

The input voltage detection unit 12 detects instantaneous voltages Vr, Vs and Vt (hereinafter, referred to as "input phase voltages Vr, Vs and Vt") of the R phase, the S phase and the T phase of the AC power source 2, respectively, which are inputted to the power conversion unit 10 from the AC power source 2. In the following description, the input phase voltages Vr, Vs and Vt may be referred to as "input phase voltage Vrst." Further, respective currents Imr, Ims and Imt of the R phase, the S phase and the T phase of the AC power source 2, which are inputted to the power conversion unit 10, may be referred to as "input phase current Imrst."

The output current detection unit 13 detects instantaneous currents Iu, Iv and Iw (hereinafter, referred to as "output phase currents Iu, Iv and Iw") of the currents flowing between the power conversion unit 10 and the U phase, the V phase and the W phase of the load 3, respectively. Further, the output current detection unit 13 detects the current by using, e.g., a Hall element that is a magneto-electric transducer. In the following description, the output phase currents Iu, Iv and Iw may be referred to as "output phase current Iuvw."

The control unit 20 performs the power conversion control between the AC power source 2 and the load 3 by controlling the power conversion unit 10. The control unit 20 has a power running operation mode and a regenerative operation mode as operation modes to be executed.

In the power running operation mode, the control unit 20 controls the power conversion unit 10 such that a three-phase AC power supplied through the input terminals Tr, Ts and Tt from the AC power source 2 is converted into a three-phase AC power of a certain voltage and frequency and outputted from the output terminals Tu, Tv, and Tw to the load 3.

In the regenerative operation mode, the control unit 20 controls the power conversion unit 10 such that a regenerative power supplied through the output terminals Tu, Tv, and Tw from the load 3 is converted into a three-phase AC power having the voltage and frequency of the AC power source 2 and supplied from the input terminals Tr, Ts and Tt to the AC power source 2.

The control unit 20 includes an input voltage estimation unit 21, a command generator 22, an oscillation component detector 23, an output voltage controller 24, and a switch driver 25.

The input voltage estimation unit 21 calculates an estimated value Erst^ (hereinafter, referred to as "power phase voltage estimation Erst^") of a power phase voltage Erst on the basis of the input phase voltage Vrst. The power phase voltage Erst includes voltages Er, Es and Et (hereinafter, referred to as "power phase voltages Er, Es and Et") of the R phase, the S phase and the T phase of the AC power source 2. Further, the power phase voltage estimation Erst^ includes estimated values (hereinafter, referred to as "power phase voltage estimations Er^, Es^ and Et^") of the power phase voltages Er, Es and Et.

The command generator 22 has, e.g., a proportional integral (PI) controller. The command generator 22 generates an output phase voltage command Vuvw* (an example of an output voltage command) such that a deviation between an output phase current command Iuvw* and an output phase current Iuvw is zero. The output phase current command Iuvw* includes output phase current commands Iu*, Iv* and Iw* of the U phase, the V phase and the W phase, and the output phase voltage command Vuvw* includes output phase voltage commands Vu*, Vv* and Vw* of the U phase, the V phase and the W phase.

The oscillation component detector 23 detects an oscillation component ΔVc included in the input phase voltage Vrst. Specifically, the oscillation component detector 23 detects a resonance frequency component of the filter 11 that is included in the input phase voltage Vrst as the oscillation component ΔVc.

Since the oscillation component ΔVc included in the input phase voltage Vrst is caused by the resonance of the filter 11, the oscillation component ΔVc may also be extracted from the voltages across the capacitors Crs, Cst and Ctr constituting the filter 11.

The output voltage controller 24 controls the output voltage of the power conversion unit 10 to suppress the resonance of the filter 11 based on the oscillation component ΔVc detected by the oscillation component detector 23. Specifically, the output voltage controller 24 calculates a voltage adjustment value corresponding to the oscillation component ΔVc. The output voltage controller 24 generates an output phase voltage command Vuvw1* by adjusting the output phase voltage command Vuvw* based on the voltage adjustment value. The output phase voltage command Vuvw1* includes output phase voltage commands Vu1*, Vv1* and Vw1* of the U phase, the V phase and the W phase.

The switch driver 25 generates gate signals S1 to S18 based on the power phase voltage estimation Erst^ and the output phase voltage command Vuvw1*. The switch driver 25 outputs the generated gate signals S1 to S18 to the bidirectional switches Sru, Ssu, Stu, Srv, Ssv, Stv, Srw, Ssw and Stw of the power conversion unit 10.

For example, in a period in which a magnitude relation between the power phase voltage estimations Er^, Es^ and Et^ does not change, the switch driver 25 uses the power phase voltage estimations Er^, Es^ and Et^ in decreasing order of magnitude as input phase voltages Ep, Em and En. The switch driver 25 converts the output phase voltage commands Vu1*, Vv1* and Vw1* into pulse width modulation (PWM) signals corresponding to the voltage values of the input phase voltages Ep, Em and En. The switch driver 25 generates the gate signals S1 to S18 by performing a commutation control process on the PWM signals.

The control unit 20 may perform power conversion between the AC power source 2 and the load 3 while suppressing the resonance of the filter 11 by performing the control of the power conversion unit 10 based on the output phase voltage command Vuvw1* that is adjusted by a voltage adjustment value corresponding to the oscillation component ΔVc.

The control unit 20 is realized by a microcomputer having a Central Processing Unit (CPU), a Read Only Memory (ROM), a Random Access Memory (RAM), input and output ports and the like, or an integrated circuit such as an Application Specific Integrated Circuit (ASIC) or Field Programmable Gate Array (FPGA).

The CPU performs some or all functions of the input voltage estimation unit 21, the command generator 22, the oscillation component detector 23, the output voltage controller 24 and the switch driver 25 by reading and executing a program stored in the ROM. Alternatively, the circuit including the ASIC or the FPGA may execute some or all functions of the input voltage estimation unit 21, the command generator 22, the oscillation component detector 23, the output voltage controller 24 and the switch driver 25.

(1.2. Resonance suppression control)

As mentioned above, the power converting apparatus 1 controls the output voltage of the power conversion unit 10 to suppress the resonance of the filter 11 based on the oscillation component ΔVc detected by the oscillation component detector 23. Such resonance suppression control will be described in detail.

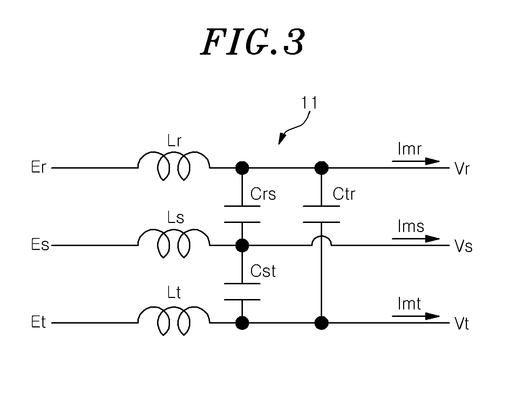

FIG. 3 is a circuit diagram of the filter 11. As shown in FIG. 3, when the inductance of the reactors Lr, Ls and Lt of the filter 11 is represented by $L_f$ and the capacitance of the capacitors Crs, Cst and Ctr is represented by $C_f$, the state equation of the filter 11 is as shown in equation (1).

$$\begin{bmatrix} \mathrm{Im}\,r \\ \mathrm{Im}\,s \\ \mathrm{Im}\,t \end{bmatrix} = -\begin{bmatrix} \dfrac{1}{sL_f} + 3sC_f & 0 & 0 \\ 0 & \dfrac{1}{sL_f} + 3sC_f & 0 \\ 0 & 0 & \dfrac{1}{sL_f} + 3sC_f \end{bmatrix} \begin{bmatrix} Vr \\ Vs \\ Vt \end{bmatrix} + \frac{1}{sL_f} \begin{bmatrix} Er \\ Es \\ Et \end{bmatrix} \quad \cdots (1)$$

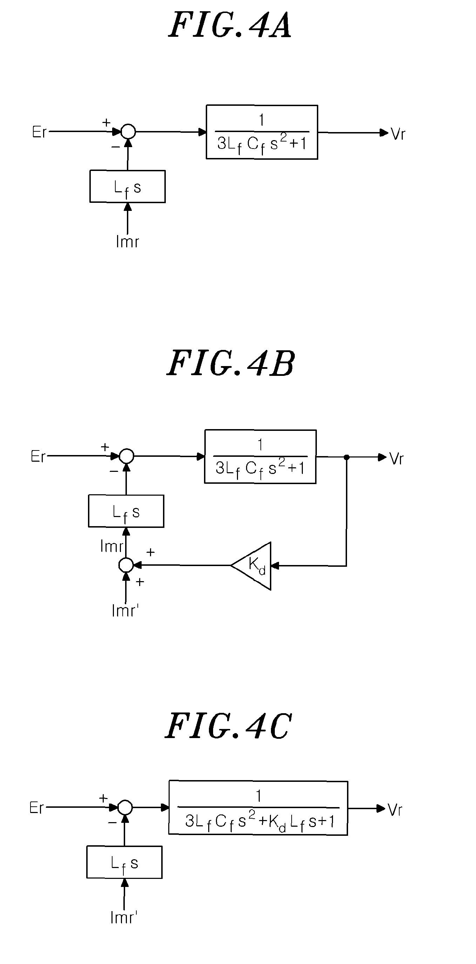

From the above equation (1), e.g., a relationship between the input phase voltage Vr and the power phase voltage Er in the R phase can be expressed as shown in FIG. 4A. FIG. 4A is a block diagram when the power phase voltage Er is an input and the input phase voltage Vr is an output. As can be seen from FIG. 4A, the filter 11 has a resonance frequency of $\sqrt{(3L_f C_f)}$ and does not include a damping element suppressing the resonance.

As shown in FIG. 4B, a configuration of feeding back the input phase voltage Vr to the input phase current Imr is added to the block diagram shown in FIG. 4A. FIG. 4B is a block diagram obtained by adding a configuration of feeding back the input phase voltage Vr to the input phase current Imr.

The block diagram shown in FIG. 4B can be replaced by a block diagram shown in FIG. 4C. FIG. 4C is a block diagram replacing the block diagram of FIG. 4B. In the block diagram shown in FIG. 4C, 「$K_dL_fs$」 appears as a damping element. Therefore, by performing the input current control using the oscillation component ΔVc of the input phase voltage Vrst, it is possible to suppress the resonance of the filter 11.

Here, an input active current can be expressed as shown in the following equations (2) and (3) by a balance between the input active power and the output active power. Further, 「$I_{inP}$」 is an input active current and 「$I_{op}$」 is an output active current. In addition, 「$V_{in}$」 is the root mean square of the input phase voltage Vrst and 「$V_o$」 is the root mean square of an output phase voltage Vuvw.

$$I_{inP}V_{in} = I_{oP}V_o \qquad \cdots (2)$$

$$I_{inP} = \frac{V_o}{V_{in}}I_{oP} \qquad \cdots (3)$$

Since the input side of the power converting apparatus 1 is a voltage source and the output side of the power converting apparatus 1 is a current source, a change in the input phase voltage Vrst and the output phase current Iuvw in response to a change in the input phase current Irst and the output phase voltage Vuvw is sufficiently slow. Thus, a relationship shown in the following equation (4) is established.

$$\Delta I_{inP} = \frac{\Delta V_o}{V_{in}}I_{oP} \qquad \cdots (4)$$

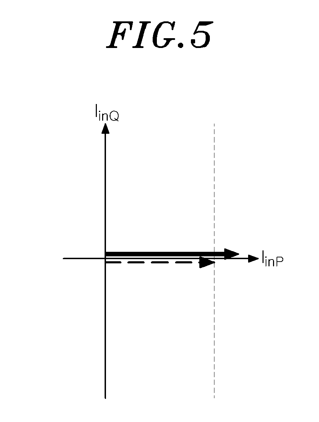

Therefore, by instantaneously controlling the output voltage $V_o$, as shown in FIG. 5, the input active current $I_{inP}$ can be controlled instantaneously. FIG. 5 is a diagram showing a variation of the input active current $I_{inP}$ according to the control of the output voltage $V_o$. The control unit 20 controls the output phase voltage Vuvw of the power conversion unit 10 to suppress the oscillation component ΔVc based on the oscillation component ΔVc.

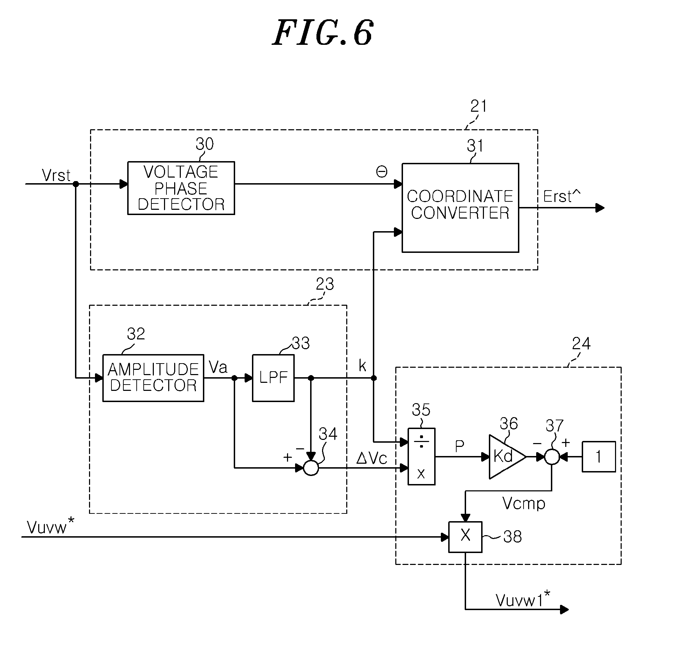

FIG. 6 is a diagram showing a configuration example of the input voltage estimation unit 21, the oscillation component detector 23 and the output voltage controller 24. Hereinafter, the input voltage estimation unit 21, the oscillation component detector 23 and the output voltage controller 24 will be sequentially described in detail with reference to FIG. 6.

(1.2.1. Input voltage estimation unit 21)

The input voltage estimation unit 21 includes a voltage phase detector 30 and a coordinate converter 31. The voltage phase detector 30 obtains a phase θ (hereinafter referred to as "input voltage phase θ") of the input phase voltage Vrst.

The voltage phase detector 30 obtains a voltage Vα in an α-axis direction and a voltage Vβ in a β-axis direction, e.g., by converting the input phase voltage Vrst into αβ components of two orthogonal axes on fixed coordinates. The voltage phase detector 30 calculates the phase of the dq-axis orthogonal coordinate system, e.g., such that when voltages Vα and Vβ are converted into dq components of a dq-axis orthogonal coordinate system, the d-axis component becomes zero. The voltage phase detector 30 outputs the calculated phase of the dq-axis orthogonal coordinate system as the input voltage phase θ.

The coordinate converter 31 calculates the power phase voltage estimation Erst^ based on an input voltage amplitude value k to be described later and the input voltage phase θ. For example, the coordinate converter 31 calculates the power phase voltage estimation Erst^ from the following equations (5) to (7).

$$Er^ = k \times \sin(\theta) \qquad \cdots (5)$$

$$Es^ = k \times \sin(\theta - (2\pi / 3)) \qquad \cdots (6)$$

$$Et^\wedge = k \times \sin(\theta + (2\pi / 3)) \quad \cdots(7)$$

(1.2.2. Oscillation component detector 23)

The oscillation component detector 23 includes an amplitude detector 32, a low pass filter (LPF) 33, and a subtractor 34. The low pass filter 33 and the subtractor 34 are an example of an oscillation component extractor.

The amplitude detector 32 detects an amplitude Va (hereinafter referred to as "input voltage amplitude Va") of the input phase voltage Vrst. The amplitude detector 32 calculates, e.g., the root mean square (effective value) of the input phase voltage Vrst, and detects the effective value thereof as the input voltage amplitude Va.

The low pass filter 33 has a cut-off frequency lower than the resonance frequency of the filter 11 to remove the resonance frequency component of the filter 11 from the input voltage amplitude Va. Accordingly, the low pass filter 33 extracts an amplitude value k (hereinafter referred to as "input voltage amplitude value k") of the fundamental wave component of the input phase voltage Vrst.

The subtractor 34 extracts the oscillation component $\Delta Vc$ included in the input voltage amplitude Va by subtracting the output of the low pass filter 33 from the input voltage amplitude Va. That is, the oscillation component detector 23 extracts a fluctuation component of the input voltage amplitude Va as the oscillation component $\Delta Vc$. The resonance frequency component of the filter 11 is included in the oscillation component $\Delta Vc$.

(1.2.3. Output voltage controller 24)

The output voltage controller 24 includes a divider 35, an amplifier 36, a subtractor 37, and a multiplier 38. Further, the divider 35, the amplifier 36 and the subtractor 37 are an example of an adjustment value calculator, and the multiplier 38 is an example of a command adjuster.

The divider 35 divides the oscillation component $\Delta Vc$ by the input voltage amplitude value k, and obtains a ratio P (=$\Delta Vc/k$) of the oscillation component $\Delta Vc$ with respect to the input voltage amplitude value k. The amplifier 36 has an adjustment gain Kd, and multiplies the division result of the divider 35 by Kd. The adjustment gain Kd is set to a value equal to or greater than 0 in the case of the power running operation mode, and is set to a value less than 0 in the case of the regenerative operation mode.

The subtractor 37 obtains a voltage adjustment value Vcmp (=$1 - \Delta Vc \times Kd/k$) by subtracting the output of the amplifier 36 from 1. The multiplier 38 generates the output phase voltage command Vuvw1* by multiplying the output phase voltage command Vuvw* by the voltage adjustment value Vcmp.

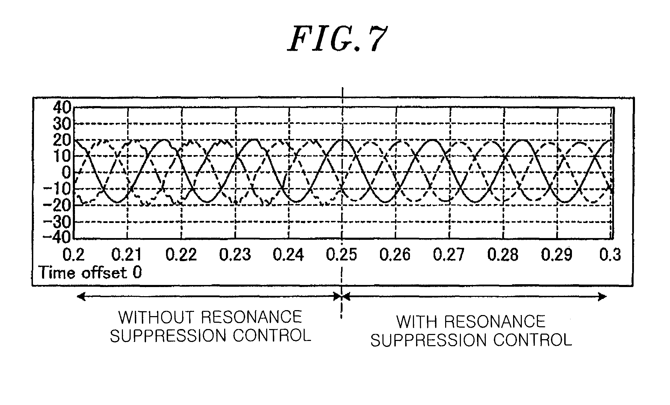

Thus, the control unit 20 of the power converting apparatus 1 controls the output voltage of the power conversion unit 10 to suppress the resonance of the filter 11 based on the oscillation component $\Delta Vc$ detected by the oscillation component detector 23. FIG. 7 is a diagram showing the simulation results of a three-phase AC output voltage of the power converting apparatus 1 before and after the resonance suppression control is performed in the power converting apparatus 1. As shown in FIG. 7, it can be seen that the resonance is suppressed by the resonance suppression control.

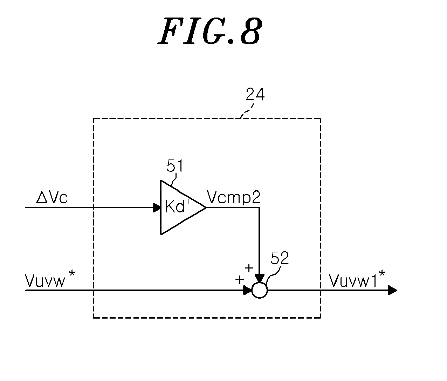

The output voltage controller 24 shown in FIG. 6 may have, e.g., a configuration shown in FIG. 8. FIG. 8 is a diagram showing another configuration example of the output voltage controller 24. The output voltage controller 24 shown in FIG. 8 includes an amplifier 51 and an adder 52. The amplifier 51 has an adjustment gain Kd', and calculates a voltage adjustment value Vcmp2 by multiplying the oscillation component $\Delta Vc$ by Kd'. The adder 52 generates the output phase voltage command Vuvw1* by adding the voltage adjustment value Vcmp2 to the output phase voltage command Vuvw*.

(1.3. Processing flow by the control unit 20)

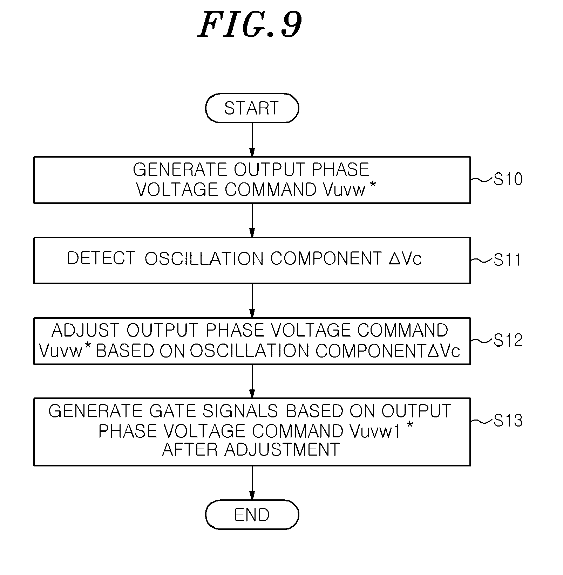

FIG. 9 is an example of a flowchart showing a flow of control processing of the control unit 20. The control unit 20 repeatedly executes the control processing shown in FIG. 9 at predetermined cycles.

As shown in FIG. 9, the control unit 20 generates the output phase voltage command Vuvw* (step S10), and detects the oscillation component $\Delta Vc$ of the input phase voltage Vrst (step S11).

Then, the control unit 20 generates the output phase voltage command Vuvw1* by adjusting the output phase voltage command Vuvw* based on the oscillation component $\Delta Vc$ of the input phase voltage Vrst (step S12). Based on the output phase voltage command Vuvw1*, the control unit 20 generates the gate signals S1 to S18 (step S13).

The control unit 20 allows the power conversion unit 10 to output the output phase voltage Vuvw which suppresses the resonance of the filter 11 by controlling the power conversion unit 10 by the gate signals S1 to S18. In addition, since the control unit 20 does not control the output phase current Iuvw inputted to the command generator 22, it is possible to avoid the deterioration of the responsiveness of the power conversion control due to interference between the resonance suppression control and the current control.

(2. Second Embodiment)

Next, a power converting apparatus in accordance with a second embodiment will be described. The power converting apparatus in accordance with the second embodiment is different from the power converting apparatus 1 in accordance with the first embodiment in that it controls the output voltage by controlling the duty ratio of the PWM control based on the oscillation component $\Delta$Vc. In the following description, components having the same functions as those of the power converting apparatus 1 are denoted by the same reference numerals, and a redundant description will be omitted.

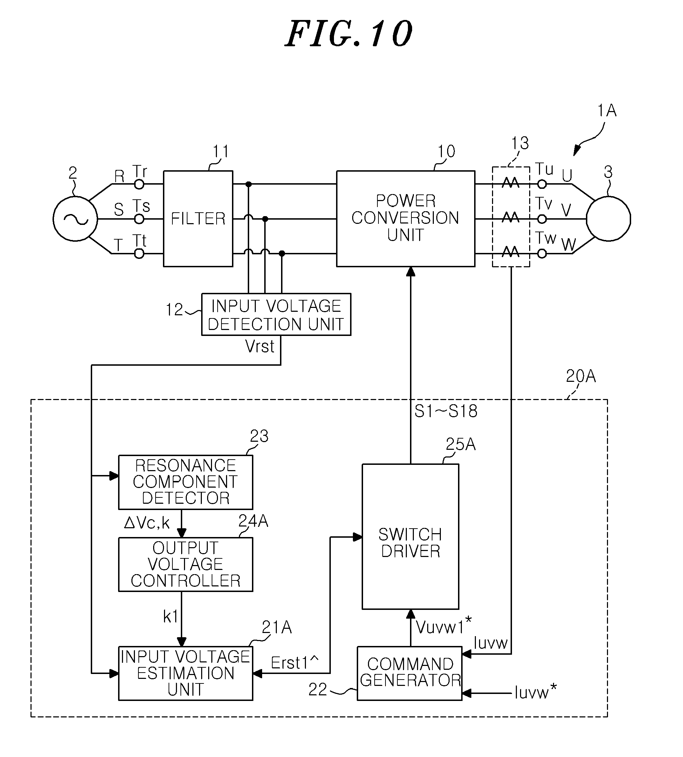

As shown in FIG. 10, a power converting apparatus 1A in accordance with the second embodiment includes the filter 11, the input voltage detection unit 12, the output current detection unit 13 and a control unit 20A. The control unit 20A includes an input voltage estimation unit 21A, the command generator 22, the oscillation component detector 23, an output voltage controller 24A, and a switch driver 25A.

The output voltage controller 24A adjusts the input voltage amplitude value k to be used in the PWM control of the power conversion unit 10 based on the oscillation component $\Delta$Vc and outputs an input voltage amplitude value k1 thus adjusted. The input voltage estimation unit 21A calculates a power phase voltage estimation Erst1^ based on the input phase voltage Vrst and the input voltage amplitude value k1. The power phase voltage estimation Erst1^ includes estimated values (hereinafter referred to as power phase voltage estimations Er1^, Es1^ and Et1^) of the power phase voltages Er, Es and Et of the R phase, the S phase and the T phase.

The switch driver 25A generates the gate signals S1 to S18 based on the power phase voltage estimation Erst1^ and the output phase voltage command Vuvw*. For example, in a period in which a magnitude relation between the power phase voltage estimations Er1^, Es1^ and Et1^ does not change, the switch driver 25A uses the power phase voltage estimations Er1^, Es1^ and Et1^ in decreasing order of magnitude as input phase voltages Ep, Em and En (Ep>Em>En).

The switch driver 25A converts the output phase voltage commands Vu*, Vv* and Vw* into PWM signals having a duty ratio corresponding to the voltage values of the input phase voltages Ep, Em and En. The switch driver 25 generates the gate signals S1 to S18 by performing a commutation control process on the PWM signals.

When a duty ratio matrix of the PWM control is represented by $\ulcorner$D$\lrcorner$, a vector component of the input phase current Imrst is an input voltage vector $V_i$, and a vector component of the output phase voltage Vuvw is an output voltage vector $V_o$, the following equation (8) is established.

$$V_o = DV_i \qquad \cdots (8)$$

When the duty ratio matrix D is derived by using the input voltage vector $V_i$ decreased by being multiplied by 1/k, the duty ratio matrix D is multiplied by k as in the following equation (9).

$$V_o = (kD)(\frac{1}{k}V_i) \qquad \cdots (9)$$

However, since the input voltage vector $V_i$ does not actually change, the above equation (9) can be expressed by the following equation (10), in which the output voltage vector $V_o$ is multiplied by k.

$$kV_o = (kD)V_i \qquad \cdots (10)$$

Thus, when varying the amplitude of the power phase voltage estimation Erst^ to be used for calculation of the duty ratio, it is possible to indirectly change the amplitude of the output phase voltage Vuvw. Therefore, the output voltage controller 24A adjusts the input voltage amplitude value k based on the oscillation component $\Delta$Vc.

The switch driver 25A generates a PWM signal having a duty ratio corresponding to the output phase voltage command Vuvw* and the power phase voltage estimation Erst1^ generated by the input voltage amplitude value k1 after the adjustment. Thus, the control unit 20A may control the output phase voltage Vuvw of the power conversion unit 10 to suppress the oscillation component $\Delta$Vc by adjusting the duty ratio of the PWM signal based on the oscillation component $\Delta$Vc.

Hereinafter, an example of a method of generating a PWM signal by the switch driver 25A will be described.

For example, in a period in which a magnitude relation between the power phase voltage estimations Er1^, Es1^ and Et1^ does not change, the switch driver 25A uses the power phase voltage estimations Er1^, Es1^ and Et1^ in decreasing order of magnitude as input phase voltages Ep, Em and En.

The switch driver 25A has, e.g., a table to obtain an input current distribution rate $\alpha$ from the phase of the power phase voltage estimation Erst1^. The input current distribution rate $\alpha$ defines, e.g., a connection period T1 to the input phase voltage Ep and a connection period T2 to the input phase voltage Em. The input current distribution rate $\alpha$ is expressed by, e.g., $\alpha$=T2/T1.

The switch driver 25A adjusts the amplitude of a carrier signal based on the input current distribution rate $\alpha$ and the input phase voltages Ep, Em and En. For example, if $\Delta$emax = Ep - En and $\Delta$emid = Em - En are established, the switch driver 25A uses $\Delta$emax + $\alpha\times\Delta$emid as the amplitude of the carrier signal.

Further, the switch driver 25A generates a modulated wave signal based on the input current distribution rate $\alpha$ and the output phase voltage command Vuvw*. For example, (1 + a) $\times$Vuvw* and Vuvw* are used as the modulated wave signal. For example, if the input phase voltage Em is positive and the output phase voltage command Vw* among the output phase voltage commands Vu*, Vv* and Vw* is lowest, the switch driver 25A uses (1 + $\alpha$) $\times$Vu* and Vu* as the modulated wave signal for the U phase, and uses (1 + $\alpha$)$\times$Vv* and Vv* as the modulated wave signal for the V phase.

The switch driver 25A generates a PWM signal by comparing the carrier signal and the modulated wave signal. The switch driver 25 generates the gate signals S1 to S18 by performing a commutation process on the PWM signal.

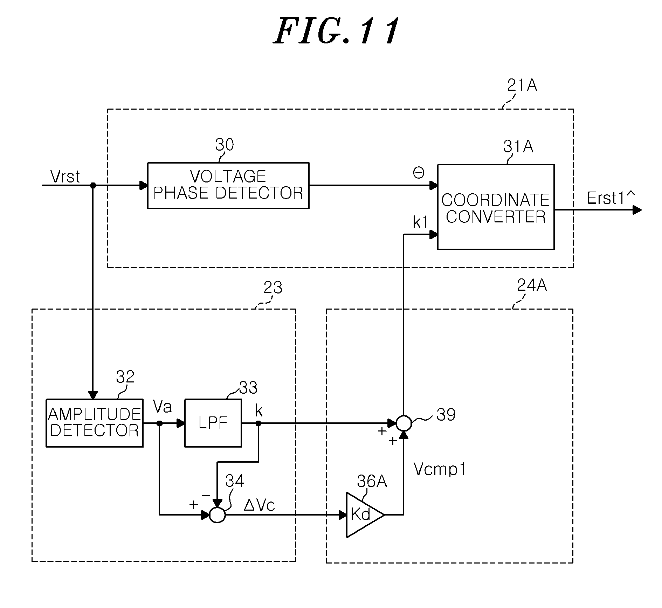

FIG. 11 is a diagram showing a configuration example of the input voltage estimation unit 21A, the oscillation component detector 23 and the output voltage controller 24A. Hereinafter, the output voltage controller 24A and the input voltage estimation unit 21A will be sequentially described in detail with reference to FIG. 11.

The output voltage controller 24A includes an amplifier 36A and an adder 39. The amplifier 36A has an adjustment gain Kd, and generates a voltage adjustment value Vcmp1 (= $\Delta$Vc$\times$Kd) by multiplying the oscillation component $\Delta$Vc by Kd. The adder 39 adjusts the input voltage amplitude value k by adding a voltage adjustment value Vcmp1 to the input voltage amplitude value k. The adder 39 outputs an input voltage amplitude value k1 (= k + Vcmp1) thus adjusted.

The input voltage estimation unit 21A includes the voltage phase detector 30 and a coordinate converter 31A. The coordinate converter 31A calculates the power phase voltage estimation Erst1^ based on the input voltage amplitude value k1 and the input voltage phase $\theta$. For example, the input voltage estimation unit 21A calculates the power phase voltage estimation Erst1^ by the equation obtained by replacing Erst^ with Erst1^ and replacing k with k1 in the above equations (5) to (7).

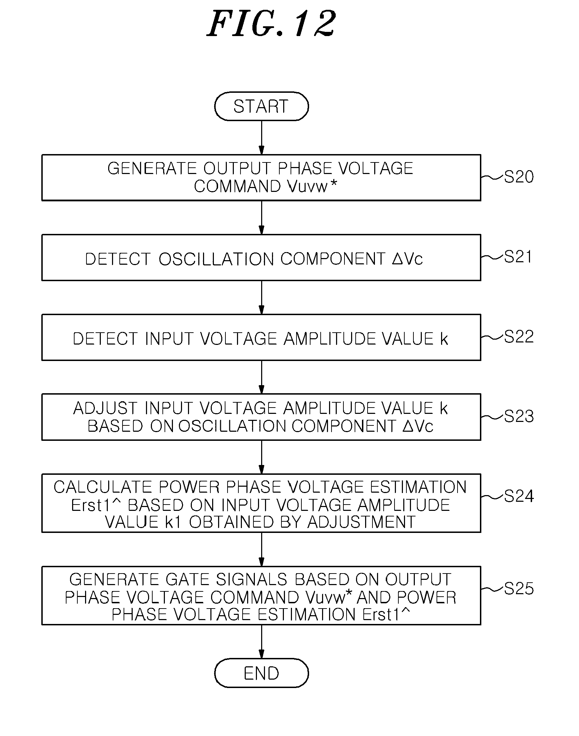

FIG. 12 is an example of a flowchart showing a flow of control processing of the control unit 20A. The control unit 20A repeatedly executes the control processing shown in FIG. 12 at predetermined cycles.

As shown in FIG. 12, the control unit 20A generates the output phase voltage command Vuvw* (step S20), and detects the oscillation component $\Delta$Vc of the input phase voltage Vrst (step S21). Further, the control unit 20A detects the input voltage amplitude value k (step S22).

Then, the control unit 20A generates the input voltage amplitude value k1 by adjusting the input voltage amplitude value k based on the oscillation component $\Delta$Vc of the input phase voltage Vrst (step S23). Based on the input voltage amplitude value k1 and the input voltage phase $\theta$, the control unit 20A calculates the power phase voltage estimation Erst1^ (step S24).

The control unit 20A generates a PWM signal having a duty ratio on the basis of the output phase voltage command Vuvw* and the power phase voltage estimation Erst1^ whose amplitude is adjusted based on the oscillation component $\Delta$Vc. The control unit 20A generates the gate signals S1 to S18 by performing a commutation control process on the PWM signal (step S25).

The control unit 20A allows the power conversion unit 10 to output the output phase voltage Vuvw whose amplitude is adjusted based on the oscillation component $\Delta$Vc by controlling the power conversion unit 10 by the gate signals S1 to S18.

Therefore, the power converting apparatus 1A in accordance with the second embodiment can suppress the resonance of the filter 11. In addition, since the control unit 20A does not control the output phase current Iuvw inputted to the command generator 22, it is possible to avoid the deterioration of the responsiveness of the power conversion control due to interference between the resonance suppression control and the current control.

(3. Third Embodiment)

Next, a power converting apparatus in accordance with a third embodiment will be described. The power converting apparatus in accordance with the third embodiment is different from the power converting apparatus 1 in accordance with the first embodiment in that it executes the resonance suppression control for controlling the input current phase in addition to the resonance suppression control for controlling the output voltage amplitude. In the following description, components having the same functions as those of the power converting apparatus 1 are denoted by the same reference numerals, and a redundant description will be omitted.

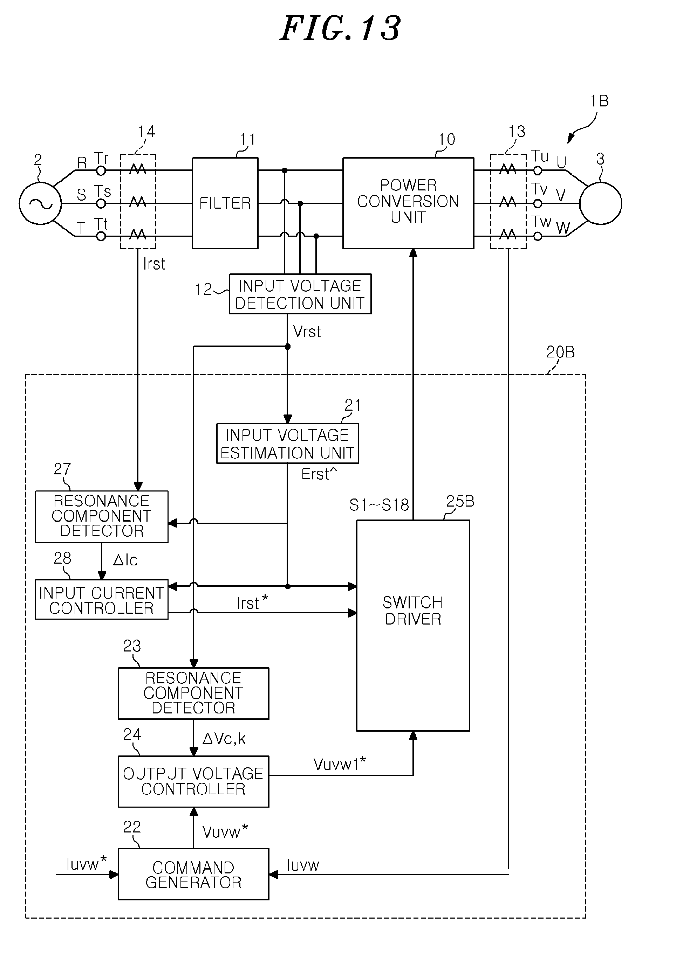

FIG. 13 is a diagram illustrating a configuration example of a power converting apparatus 1B in accordance with the third embodiment. As shown in FIG. 13, the power converting apparatus 1B includes the power conversion unit 10, the filter 11, the input voltage detection unit 12, the output current detection unit 13, a source current detection unit 14, and a control unit 20B.

The source current detection unit 14 detects instantaneous values Ir, Is and It (hereinafter, referred to as "input phase current Irst") of the R phase, the S phase and the T phase currents supplied to the power converting apparatus 1B from the AC power source 2. Further, the source current detection unit 14 detects the current by using, e.g., a Hall element that is a magneto-electric transducer.

The control unit 20B executes the resonance suppression control for controlling the input current phase in addition to the resonance suppression control for controlling the output voltage amplitude. The control unit 20B includes the input voltage estimation unit 21, the command generator 22, the oscillation component detector 23, the output voltage controller 24, a switch driver 25B, an oscillation component detector 27, and an input current controller 28.

The oscillation component detector 27 extracts an oscillation component $\Delta$Ic included in the input phase current Irst. Specifically, the oscillation component detector 27 detects a resonance frequency component of the filter 11 included in the input phase current Irst as the oscillation component $\Delta$Ic.

Since the oscillation component $\Delta$Ic included in the input phase current Irst is caused by the resonance of the filter 11, the oscillation component $\Delta$Ic may also be extracted from the current (hereinafter referred to as "capacitor current Ic") flowing through the capacitors Crs, Cst and Ctr constituting the filter 11. The source current detection unit 14 detects the input phase current Irst inputted to the power converting apparatus 1B, but the source current detection unit 14 may detect the current flowing through the capacitors Crs, Cst and Ctr. In this case, the oscillation component detector 27 extracts an oscillation component of the capacitor current Ic as the oscillation component $\Delta$Ic.

The oscillation component detector 27 has the same configuration as, e.g., the oscillation component detector 23 shown in FIG. 6. Also, the oscillation component detector 27 may include a filter (e.g., a band-pass filter or high-pass filter) passing the resonance frequency component of the filter 11.

The input current controller 28 controls the input current phase of the power conversion unit 10 to suppress the resonance of the filter 11 based on the oscillation component $\Delta$Ic detected by the oscillation component detector 27. Specifically, the input current controller 28 calculates a phase adjustment value corresponding to the oscillation component $\Delta$Ic. The input current controller 28 generates the input phase current command Irst* by shifting the phase of the power phase voltage estimation Erst^ by the phase adjustment value, and outputs the input phase current command Irst* to the switch driver 25B. The input phase current command Irst* includes input phase current commands Ir*, Is* and It* of the R phase, the S phase and the T phase.

The switch driver 25B generates the gate signals S1 to S18 based on the power phase voltage estimation Erst^, the input phase current command Irst* and the output phase voltage command Vuvw1*. Thus, the control unit 20B may control the output phase voltage Vuvw of the power conversion unit 10 to suppress the oscillation component $\Delta$Ic by adjusting the duty ratio of the PWM signal based on the oscillation component $\Delta$Ic.

Hereinafter, an example of a method of generating a PWM signal by the switch driver 25B will be described. For example, in a period in which a magnitude relation between the power phase voltage estimations Er^, Es^ and Et^ does not change, the switch driver 25B uses the power phase voltage estimations Er^, Es^ and Et^ in decreasing order of magnitude as input phase voltages Ep, Em and En.

The switch driver 25B has, e.g., a table to obtain an input current distribution rate $\alpha$ from the phase of the input phase current command Irst*. The input current distribution rate $\alpha$ defines, e.g., a connection period T1 to the input phase voltage Ep and a connection period T2 to the input phase voltage Em. The input current distribution rate $\alpha$ is expressed by, e.g., $\alpha$=T2/T1.

Similarly to the switch driver 25A, the switch driver 25B adjusts the amplitude of a carrier signal based on the input current distribution rate $\alpha$ and the input phase voltages Ep, Em and En. Also, similarly to the switch driver 25A, the switch driver 25B generates a modulated wave signal based on the input current distribution rate $\alpha$ and the output phase voltage command Vuvw1*.

The switch driver 25B generates a PWM signal by comparing the carrier signal and the modulated wave signal. The switch driver 25B generates the gate signals S1 to S18, e.g., by performing a commutation process on the PWM signal.

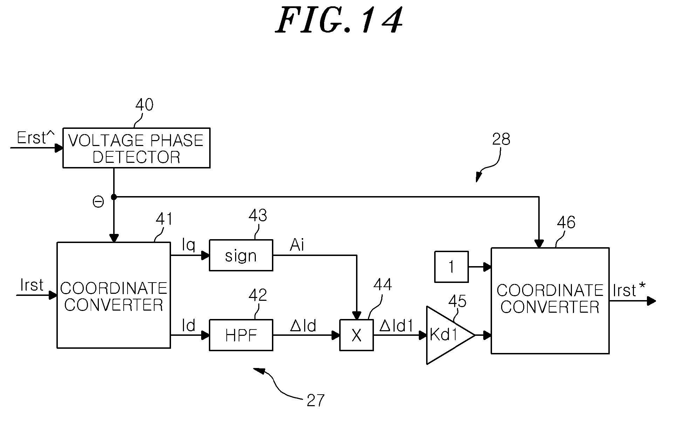

FIG. 14 is a diagram showing a configuration example of the oscillation component detector 27 and the input current controller 28 shown in FIG. 13. In FIG. 14, an example of performing dq coordinate conversion of three phases and arithmetic processing is illustrated. In this case, dq coordinates are coordinates of two orthogonal axes rotating according to the input voltage phase θ.

The oscillation component detector 27 includes a voltage phase detector 40, a coordinate converter 41, and a high pass filter (HPF) 42. The input current controller 28 includes the voltage phase detector 40, the coordinate converter 41, a sign function calculator 43, a multiplier 44, an amplifier 45, and a coordinate converter 46. In the example shown in FIG. 14, the oscillation component detector 27 and the input current controller 28 share the voltage phase detector 40 and the coordinate converter 41. However, each of the oscillation component detector 27 and the input current controller 28 may be configured to have the voltage phase detector 40 and the coordinate converter 41.

The voltage phase detector 40 detects the input voltage phase θ based on the power phase voltage estimation Erst^. Similarly to the voltage phase detector 30, e.g., the voltage phase detector 40 calculates the phase of the dq-axis orthogonal coordinate system such that, e.g., when the power phase voltage estimation Erst^ is converted into αβ components of two orthogonal axes on fixed coordinates, and converted into dq components of the dq-axis orthogonal coordinate system, the d-axis component becomes zero.

The voltage phase detector 40 outputs the calculated phase of the dq-axis orthogonal coordinate system as the input voltage phase θ. In the case of using the input voltage phase θ detected by the voltage phase detector 30, the voltage phase detector 40 is unnecessary.

After converting the input phase current Irst into αβ components of two orthogonal axes on fixed coordinates, based on the input voltage phase θ, the coordinate converter 41 converts the αβ components into dq components of two orthogonal axes rotating according to the input voltage phase θ. Thus, the input phase current Irst is converted into a d-axis source current Id and a q-axis source current Iq.

The high pass filter 42 removes a fundamental wave component included in the input phase current Irst by setting the cut-off frequency to be lower than the resonance frequency of the filter 11. Thus, an oscillation component ΔId (example of ΔIc) including the resonance frequency component of the filter 11 is extracted.

The sign function calculator 43 outputs a polarity signal Ai of high level to the multiplier 44 when the polarity of the q-axis source current Iq is positive. Further, the sign function calculator 43 outputs a polarity signal Ai of low level to the multiplier 44 when the polarity of the q-axis source current Iq is negative. In the case of the power running operation mode, the polarity of the q-axis source current Iq is positive, and in the case of the regenerative operation mode, the polarity of the q-axis source current Iq is negative.

The multiplier 44 multiplies the oscillation component ΔId and the polarity signal Ai, and outputs the multiplication result as an oscillation component ΔId1. Accordingly, since the oscillation component ΔId1 is changed between positive and negative values depending on the polarity of the q-axis source current Iq, the phase of the input phase current command Irst* can be shifted in an appropriate direction according to the operation mode.

The amplifier 45 has an adjustment gain Kd1, and multiplies the oscillation component ΔId1 by Kd1. The coordinate converter 46 inputs 1 as the q-axis component, and inputs ΔId1 as the d-axis component. The coordinate converter 46 generates the input phase current command Irst* by performing coordinate conversion of the inputted dq components based on the input voltage phase θ.

Thus, the power converting apparatus 1B performs the resonance suppression control for controlling the input current phase in addition to the resonance suppression control for controlling the output voltage amplitude. Since the control of the output voltage amplitude and the control of the input current phase do not interfere with each other, it is possible to improve the accuracy of resonance suppression as compared with the case of executing only the resonance suppression control for controlling the output voltage amplitude.

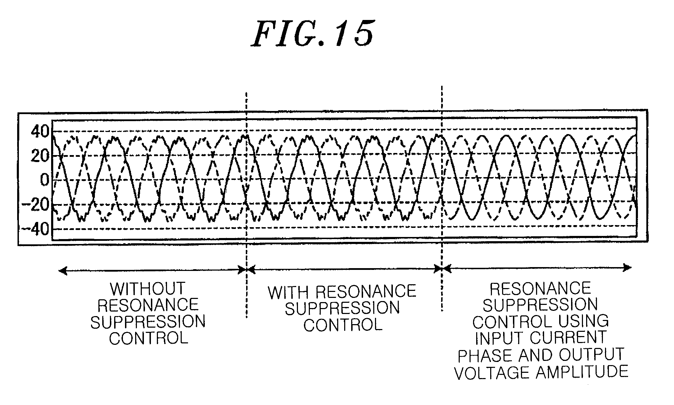

FIG. 15 is a diagram showing the simulation results of a three-phase AC output voltage of the power converting apparatus 1B before and after the resonance suppression control is performed in the power converting apparatus 1B. As shown in FIG. 15, it can be seen that the resonance is suppressed by the resonance suppression control. Also, it can be seen that a resonance suppression effect is higher in the case of executing both the control of the output voltage amplitude and the control of the input current phase than the case of executing only the resonance suppression control for controlling the input current phase.

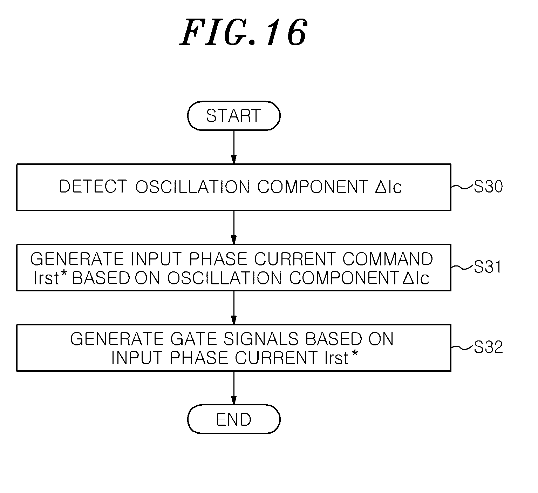

FIG. 16 is an example of a flowchart showing a flow of control processing of the control unit 20B. The control unit 20B repeatedly executes the control processing shown in FIG. 16 at predetermined cycles. In the control shown in FIG. 16, the resonance suppression control for controlling the input current phase is performed mainly, and the resonance suppression control for controlling the output voltage amplitude is the same as that shown in FIG. 12.

As shown in FIG. 16, the control unit 20B detects the oscillation component ΔIc of the input phase current Irst (step S30). Then, the control unit 20B generates an input phase current command Irst* whose phase is adjusted based on the oscillation component ΔIc of the input phase current Irst (step S31).

The control unit 20B generates the gate signals S1 to S18 based on the input phase current Irst* (step S32). The control unit 20B allows the power conversion unit 10 to output the output phase voltage Vuvw which suppresses the resonance of the filter 11 by controlling the power conversion unit 10 by the gate signals S1 to S18.

(4. Fourth Embodiment)

Next, a power converting apparatus in accordance with a fourth embodiment will be described. The power converting apparatus in accordance with the fourth embodiment is different from the power converting apparatus 1A in accordance with the second embodiment in that it executes the resonance suppression control for controlling the input current phase in addition to the resonance suppression control for controlling the output voltage amplitude. In the following description, components having the same functions as those of the power converting apparatuses 1A and 2B are denoted by the same reference numerals, and a redundant description will be omitted.

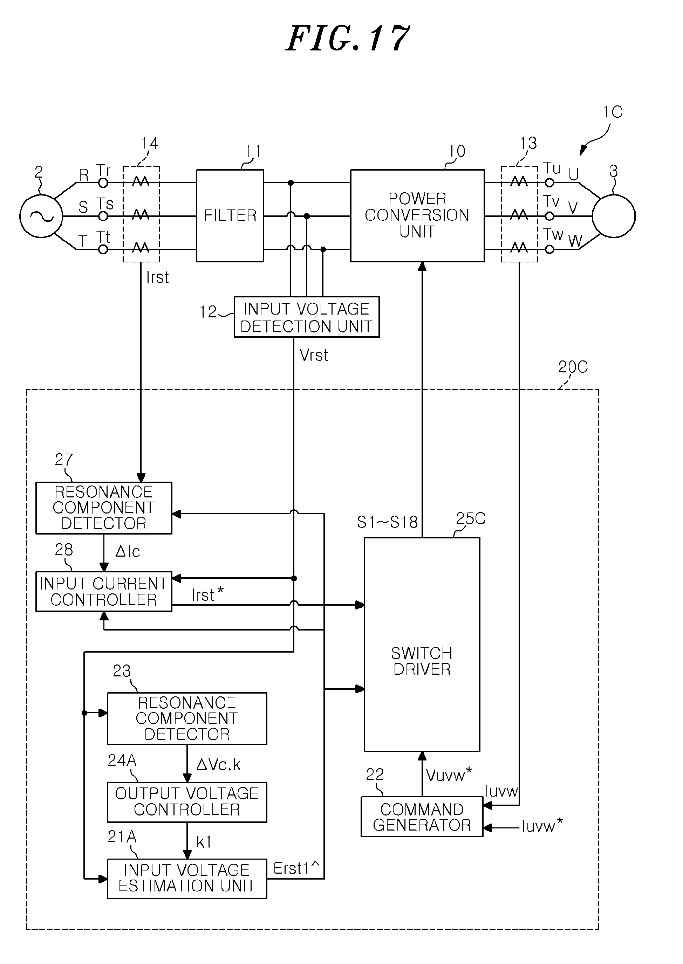

FIG. 17 is a diagram illustrating a configuration example of a power converting apparatus 1C in accordance with the fourth embodiment. As shown in FIG. 17, the power converting apparatus 1C includes the power conversion unit 10, the filter 11, the input voltage detection unit 12, the output current detection unit 13, the source current detection unit 14, and a control unit 20C.

The control unit 20C includes the input voltage estimation unit 21A, the command generator 22, the oscillation component detector 23, the output voltage controller 24A, a switch driver 25C, the oscillation component detector 27, and the input current controller 28.

The switch driver 25C generates a PWM signal having a duty ratio based on the output phase voltage command Vuvw* and the power phase voltage estimation Erst1^ whose amplitude is adjusted based on the oscillation component ΔVc. The switch driver 25C generates the gate signals S1 to S18 by performing a commutation control process on the generated PWM signal. The switch driver 25C allows the power conversion unit 10 to output the output phase voltage Vuvw which suppresses the resonance of the filter 11 by controlling the power conversion unit 10 by the gate signals S1 to S18.

Similarly to the power converting apparatus 1B in accordance with the third embodiment, the power converting apparatus 1C in accordance with the fourth embodiment has the resonance suppression control for controlling the input current phase in addition to the resonance suppression control for controlling the output voltage amplitude. Thus, it is possible to improve the accuracy of resonance suppression as compared with the case of performing only the resonance suppression control for controlling the output voltage amplitude.

(5. Fifth Embodiment)

Next, a power converting apparatus in accordance with a fifth embodiment will be described. The power converting apparatus in accordance with the fifth embodiment is different from the power converting apparatus 1 in accordance with the first embodiment in that the resonance suppression control is executed by the oscillation component ΔIc of the input phase current Irst instead of the oscillation component ΔVc included in the input phase voltage Vrst. In the following description, components having the same functions as those of the power converting apparatus 1 are denoted by the same reference numerals, and a redundant description will be omitted.

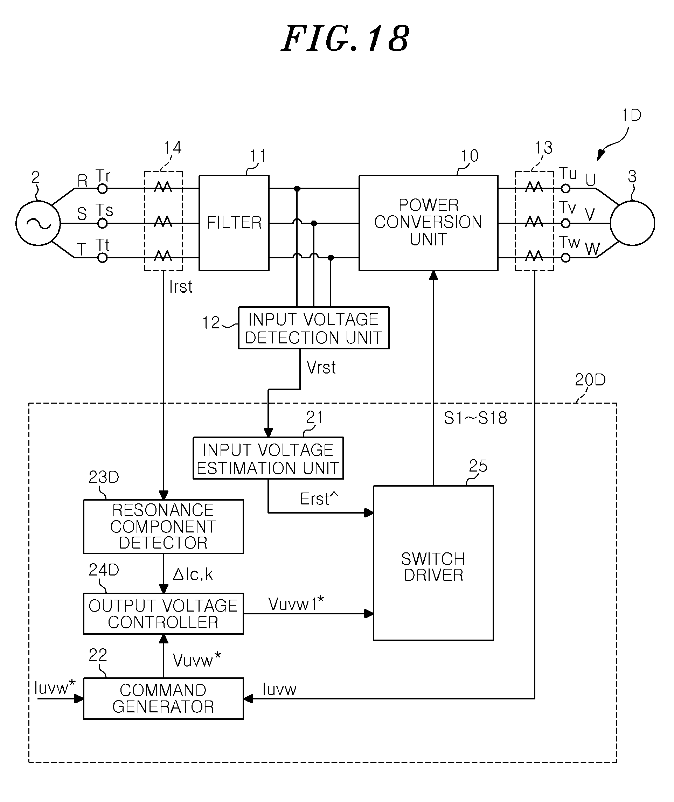

FIG. 18 is a diagram illustrating a configuration example of a power converting apparatus 1D in accordance with the fifth embodiment. As shown in FIG. 18, the power converting apparatus 1D includes the power conversion unit 10, the filter 11, the input voltage detection unit 12, the output current detection unit 13, the source current detection unit 14, and a control unit 20D.

The control unit 20D includes the input voltage estimation unit 21, the command generator 22, an oscillation component detector 23D, an output voltage controller 24D, and the switch driver 25.

The oscillation component detector 23D extracts the oscillation component ΔIc included in the input phase current Irst. Specifically, the oscillation component detector 23D detects the resonance frequency component of the filter 11 included in the input phase current Irst as the oscillation component ΔIc.

Further, the oscillation component detector 23D has the same configuration as, e.g., the oscillation component detector 23 shown in FIG. 6. Also, the oscillation component detector 23D may be a filter (e.g., a band-pass filter or high-pass filter) passing the resonance frequency component of the filter 11.

Further, the source current detection unit 14 has been configured to detect the input phase current Irst inputted to the power converting apparatus 1D, but the source current detection unit 14 may detect the current flowing through the capacitors Crs, Cst and Ctr. In this case, the oscillation component detector 23D extracts the oscillation component ΔIc of the capacitor current Ic from the current flowing through the capacitors Crs, Cst and Ctr.

The output voltage controller 24D controls the output voltage of the power conversion unit 10 to suppress the resonance of the filter 11 based on the oscillation component ΔIc detected by the oscillation component detector 23D. For example, the output voltage controller 24D calculates a voltage adjustment value corresponding to the oscillation component ΔIc and generates the output phase voltage command Vuvw1* by multiplying the voltage adjustment value by the output phase voltage command Vuvw*. The output voltage controller 24D has the same configuration as, e.g., the output voltage controller 24 shown in FIG. 6.

Thus, the power converting apparatus 1D in accordance with the fifth embodiment generates the output phase voltage command Vuvw1* by adjusting the output phase voltage command Vuvw* based on the voltage adjustment value according to the oscillation component ΔIc included in the input phase current Irst. Thus, the power converting apparatus 1D allows the power conversion unit 10 to output the output phase voltage Vuvw which suppresses the resonance of the filter 11.

Also in the configuration in which the source current detection unit 14 is added to the configuration of the power converting apparatus 1A in accordance with the second embodiment, and the oscillation component detector 23 is replaced by the oscillation component detector 23D, it is possible to perform the resonance suppression similarly to the power converting apparatus 1D. In this case, the output voltage controller 24A has an adjustment gain Kd corresponding to the oscillation component ΔIc which substitutes for the oscillation component ΔVc.

Also in the configuration in which the oscillation component detector 23 is deleted from the configuration of each of the power converting apparatus 1B and 1C in accordance with the third and fourth embodiments, and the oscillation component ΔIc from the oscillation component detector 27 is inputted to the output voltage controller 24A, it is possible to perform the resonance suppression similarly to the power converting apparatus 1D. In this case, each of the output voltage controllers 24 and 24A has an adjustment gain Kd corresponding to the oscillation component ΔIc which substitutes for the oscillation component ΔVc.

(6. Others)

In the above embodiment, a configuration of detecting the voltages of the R phase, the S phase and the T phase between the filter 11 and the power conversion unit 10 has been described as an example of the input voltage detection unit 12, but the input voltage detection unit 12 may be configured to detect the voltages of the R phase, the S phase and the T phase between the AC power source 2 and the filter 11. Also in this case, it is possible to detect the oscillation component ΔVc from the voltage detected by the input voltage detection unit 12 due to the influence of the source impedance.

Other effects and other modified examples can be readily derived by those skilled in the art. For that reason, the broad aspect of the present disclosure is not limited to the specific disclosure and the representative embodiment shown and described above. Accordingly, the present disclosure can be modified in many different forms without departing from the scope defined by the appended claims and the equivalents thereof.

**Claims**

1.  A power converting apparatus comprising:

    a power converter provided between each phase of an AC power source and each phase of a load;
    a controller configured to control the power converter to perform a power conversion control between the AC power source and the load; and
    a filter provided between the AC power source and the power converter,
    wherein the controller includes:

    an oscillation component detector configured to detect an oscillation component included in an input voltage of the power converter or an oscillation component included in a current flowing through the filter; and
    an output voltage controller configured to control an output voltage of the power converter to suppress a resonance of the filter based on the oscillation component detected by the oscillation component detector.

2.  The power converting apparatus of claim 1, wherein the controller further includes:

    a command generator configured to generate an output voltage command; and
    a switch driver configured to control the output voltage of the power converter based on the output voltage command,
    wherein the output voltage controller is configured to adjust the output voltage command based on the oscillation component detected by the oscillation component detector.

3.  The power converting apparatus of claim 2, wherein the output voltage controller includes:

    an adjustment value calculator configured to calculate a voltage adjustment value based on a ratio of the input voltage and the oscillation component detected by the oscillation component detector; and
    a command adjuster configured to adjust the output voltage command by multiplying the voltage adjustment value by the output voltage command.

4.  The power converting apparatus of claim 1, wherein the controller further includes:

    a command generator configured to generate an output voltage command; and
    a switch driver configured to PWM-control the power converter based on the output voltage command,
    wherein the output voltage controller controls the output voltage by controlling a duty ratio of the PWM control based on the oscillation component detected by the oscillation component detector.

5. The power converting apparatus of claim 4, wherein the output voltage controller is configured to adjust the duty ratio of the PWM control by adjusting an amplitude value of the input voltage to be used in the PWM control based on the oscillation component detected by the oscillation component detector, and
wherein the switch driver performs the PWM control by the duty ratio corresponding to the output voltage command and the amplitude value of the input voltage.

6. The power converting apparatus of any one of claims 1 to 5, wherein the oscillation component detector includes:

an amplitude detector configured to detect an amplitude of a current flowing through the filter or an amplitude of the input voltage; and
an oscillation component extractor configured to extract a fluctuation component of the amplitude detected by the amplitude detector as the oscillation component.

7. The power converting apparatus of any one of claims 1 to 6, wherein the controller further includes:

an input current controller configured to control a phase of an input current of the power converter to suppress a resonance of the filter based on the oscillation component detected by the oscillation component detector.

8. A control device for use in a power converting apparatus which includes: a power converter provided between each phase of an AC power source and each phase of a load and a filter provided between the AC power source and the power converter, the control device comprising:

an oscillation component detector configured to detect an oscillation component included in an input voltage of the power converter or an oscillation component included in a current flowing through the filter; and
an output voltage controller configured to control an output voltage of the power converter to suppress a resonance of the filter based on the oscillation component detected by the oscillation component detector

9. A control method of a power converting apparatus comprising:

detecting an oscillation component included in an input voltage of a power converter provided between each phase of an AC power source and each phase of a load, or an oscillation component included in a current flowing through a filter provided between the AC power source and the power converter; and
controlling an output voltage of the power converter to suppress a resonance of the filter based on the detected oscillation component.

10. The control method of claim 9, further comprising:

generating an output voltage command that is a command for the output voltage; and
controlling the power converter based on the output voltage command adjusted based on the detected the oscillation component.

11. The control method of claim 9, further comprising:

generating an output voltage command that is a command for the output voltage; and
PWM-controlling the power converter based on the output voltage command,
wherein the controlling the output voltage comprises controlling the output voltage by controlling a duty ratio of the PWM control based on the detected oscillation component.

## FIG.1

## FIG.2

# FIG.3

## FIG.4A

## FIG.4B

## FIG.4C

FIG.5

# FIG.6

# FIG. 7

|  | WITHOUT RESONANCE SUPPRESSION CONTROL | WITH RESONANCE SUPPRESSION CONTROL |

# FIG.8

# FIG.9

```
                    ┌─────────┐
                    │  START  │
                    └─────────┘
                         │
                         ▼
    ┌───────────────────────────────────────┐
    │        GENERATE OUTPUT PHASE           │
    │      VOLTAGE COMMAND Vuvw *            │ ~S10
    └───────────────────────────────────────┘
                         │
                         ▼
    ┌───────────────────────────────────────┐
    │   DETECT OSCILLATION COMPONENT ΔVc     │ ~S11
    └───────────────────────────────────────┘
                         │
                         ▼
    ┌───────────────────────────────────────┐
    │  ADJUST OUTPUT PHASE VOLTAGE COMMAND   │
    │ Vuvw* BASED ON OSCILLATION COMPONENTΔVc│ ~S12
    └───────────────────────────────────────┘
                         │
                         ▼
    ┌───────────────────────────────────────┐
    │ GENERATE GATE SIGNALS BASED ON OUTPUT  │
    │  PHASE VOLTAGE COMMAND Vuvw1 *         │ ~S13
    │            AFTER ADJUSTMENT            │
    └───────────────────────────────────────┘
                         │
                         ▼
                    ┌─────────┐
                    │   END   │
                    └─────────┘
```

# FIG.10

# FIG.11

# FIG.12

```
                    ┌─────────┐
                    │  START  │
                    └─────────┘
                         │
                         ▼
    ┌───────────────────────────────────────┐
    │   GENERATE OUTPUT PHASE VOLTAGE        │   ～S20
    │          COMMAND Vuvw*                 │
    └───────────────────────────────────────┘
                         │
                         ▼
    ┌───────────────────────────────────────┐
    │   DETECT OSCILLATION COMPONENT ΔVc     │   ～S21
    └───────────────────────────────────────┘
                         │
                         ▼
    ┌───────────────────────────────────────┐
    │   DETECT INPUT VOLTAGE AMPLITUDE VALUE k │ ～S22
    └───────────────────────────────────────┘
                         │
                         ▼
    ┌───────────────────────────────────────┐
    │   ADJUST INPUT VOLTAGE AMPLITUDE VALUE k │ ～S23
    │   BASED ON OSCILLATION COMPONENT ΔVc   │
    └───────────────────────────────────────┘
                         │
                         ▼
    ┌───────────────────────────────────────┐
    │ CALCULATE POWER PHASE VOLTAGE ESTIMATION │ ～S24
    │ Erst1^ BASED ON INPUT VOLTAGE AMPLITUDE │
    │   VALUE k1 OBTAINED BY ADJUSTMENT      │
    └───────────────────────────────────────┘
                         │
                         ▼
    ┌───────────────────────────────────────┐
    │  GENERATE GATE SIGNALS BASED ON OUTPUT │   ～S25
    │ PHASE VOLTAGE COMMAND Vuvw* AND POWER  │
    │   PHASE VOLTAGE ESTIMATION Erst1^      │
    └───────────────────────────────────────┘
                         │
                         ▼
                    ┌─────────┐
                    │   END   │
                    └─────────┘
```

EP 2 930 838 A2

# FIG.13

# FIG.14

# FIG.15

| | | |
|---|---|---|
| WITHOUT RESONANCE SUPPRESSION CONTROL | WITH RESONANCE SUPPRESSION CONTROL | RESONANCE SUPPRESSION CONTROL USING INPUT CURRENT PHASE AND OUTPUT VOLTAGE AMPLITUDE |

# FIG.16

START

DETECT OSCILLATION COMPONENT ΔIc — S30

GENERATE INPUT PHASE CURRENT COMMAND Irst* BASED ON OSCILLATION COMPONENT ΔIc — S31

GENERATE GATE SIGNALS BASED ON INPUT PHASE CURRENT Irst* — S32

END

# FIG.17

# FIG.18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013080744 A